# EUROPÄISCHE PATENTSCHRIFT

(11) **EP 0 857 387 B1**
(45) Veröffentlichungstag und Bekanntmachung des Hinweises auf die Patenterteilung: **17.12.2003**
(21) Anmeldenummer: 96945831.4
(22) Anmeldetag: 24.10.1996
(51) Int. Cl.: H04L 27/233

(54) **Verfahren und Vorrichtung zur Detektion von Signalen mit kontinuierlicher Phase**
Method and device for detecting continuous phase signals
Procédé et dispositif de détection de signaux à phase continue

(30) Priorität: 25.10.1995 DE 19539737
(43) Veröffentlichungstag der Anmeldung: 12.08.1998
(73) Patentinhaber: Siemens Mobile Communications S.p.A., 20126 Milano (IT)
(72) Erfinder: FRIEDERICHS, Karl-Josef, D-82178 Puchheim (DE); LANKL, Berthold, D-81375 München (DE)
(74) Vertreter: Heusler, Wolfgang, Dipl.-Ing.
(86) Internationale Anmeldenummer: DE9602035
(87) Internationale Veröffentlichungsnummer: WO97016001

(56) Entgegenhaltungen:
- SUPERCOMM/ICC'94, NEW ORLEANS, USA, Bd. 2, 1. - 5.Mai 1994, INSTITUTE OF ELECTRICAL AND ELECTRONICS ENGINEERS, Seiten 950-955, XP000438646 FREEBERSYSER J.A. ET AL.:: "NON-REDUNDANT ERROR CORRECTION OF UNCODED M-DPSK USING A MODIFIED VITERBI ALGORITHM AND A SLIDING BLOCK NON-COHERENT MULTI-SYMBOL DETECTOR"

## Beschreibung

Die Erfindung bezieht sich auf ein Modulationsverfahren mit kontinuierlicher Phase, wobei die Information der Phase der Signale aufmoduliert ist.

Modulationsverfahren mit kontinuierlicher Phase werden meist in Übertragungssystemen verwendet, die neben guter Bandbreiteneffizienz auch noch unempfindlich gegen nichtlineare Verzerrungen in der Übertragungskette sein sollen. Für ein robustes Systemkonzept ist es vor allem bei Funksystemen, beispielsweise beim Richtfunk, oft nötig, Phasen- und Frequenzänderungen der in der Übertragungskette verwendeten Oszillatoren (z.B. zur Mischung und Umsetzung) ohne Auftreten von Bitfehlern oder gar Synchronisationsverlusten tolerieren zu können.

Die Verwendung kohärenter Detektionsverfahren mit Trägerrückgewinnung weist zwar gute Eigenschaften bezüglich Rauschstörungen auf, diese produzieren aber bei geeignet großen Frequenzsprüngen in den zur Umsetzung verwendeten Oszillatoren Synchronausfälle des Übertragungssystems und damit ganze Bitfehlerblöcke. Die Synchronausfälle werden durch das Ausrasten der Phasenregelschleife (PLL), die für die Trägerrückgewinnung verwendet wird, verursacht. Um die in den Oszillatoren entstehenden Frequenzsprünge klein zu halten, sind vor allem in der Richtfunktechnik, d.h. bei Frequenzen bis 38 GHz hohe Aufwendungen und damit Kosten nötig. Inkohärente Detektionsverfahren weisen neben schlechterer Bandbreiteneffizienz auch eine starke Degradation der Systemeigenschaften bezüglich Rauschstörern auf.

Die Veröffentlichung in SUPERCOMM/ICC'94, 1. - 5. Mai 1994, Seiten 950-955, Freebersyser J.A. et al.: 'Non-Redundant Error Correction of Uncoded M-DPSK using a Modified Viterbi Algorithm and a Sliding Block Non-Coherent Multi-Symbol Detector', schlägt vor, auf der Empfangsseite eines mit DPSK arbeitenden Übertragungssystems eine mehrfache parallele differentielle Phasendetektion mit unterschiedlichen Intervallen der Differenzbildung vorzunehmen und anschließend die Datenfolge aus den Differenzwerten mittels eines Viterbi-Algorithmus zu schätzen.

Der Erfindung liegt die Aufgabe zugrunde, für ein Übertragungssystem mit Modulationsverfahren der eingangs genannten Art eine Lösung zur Detektion anzugeben, die dem Auftreten von Phasenund Frequenzänderungen gerecht wird, ohne die Systemeigenschaften hinsichtlich der Bitfehlerrate bei gegebenem Signalrauschabstand (E_{b/}Nₒ) deutlich zu verschlechtern.

Diese Aufgabe wird gemäß der Erfindung gelöst mit einem differentiellen Detektionsverfahren mit mehreren, sich nur im zeitlichen Abstand der zur Berechnung der differentiellen Phase verwendeten Abtastwerte unterscheidenden differentiellen Detektoren, deren Ausgänge einem Viterbidetektor zugeführt werden zur sequentiellen Schätzung der gesendeten Datenfolge.

Vorteilhafte Ausgestaltungen und Weiterbildungen des Erfindungsgegenstandes mit einer zugehörigen Detektionsanordnung sind in den Unteransprüchen angegeben.

Modulationsverfahren mit kontinuierlicher Phase ermöglichen die Realisierung von bandbreiteneffizienten Systemen. Mit dem differentiellen Detektionsverfahren wird neben der Robustheit gegen nichtlineare Verzerrungen (konstante Einhüllende) eine Unempfindlichkeit gegen Frequenzsprünge der Oszillatoren erreicht. Der dadurch entstehende Verlust an Systemempfindlichkeit wird durch die Verwendung mehrerer differentieller Detektoren, die sich nur im zeitlichen Abstand der zur Berechnung der differentiellen Phase verwendeten Abtastwerte unterscheiden, reduziert. Hierfür werden die Ausgänge dieser unterschiedlichen Detektoren einem Viterbidetektor zugeführt, der eine sequentielle Schätzung der gesendeten Datenfolge durchführt.

Durch die Verwendung unterschiedlicher differentieller Detektoren kann die enthaltene Phaseninformation besser geschätzt werden, weil die Ausgangssignale der unterschiedlichen differentiellen Detektoren von - teilweise - zeitlich unterschiedlichen Rauschabtastwerten gestört sind. Diese unterschiedlich gestörten Informationen gestatten es, eine sicherere Entscheidung für die enthaltene Phaseninformation abzuleiten als bei Verwendung nur eines Detektors. Damit wird das Systemverhalten bezüglich Rauschstörern deutlich verbessert, so daß einerseits die Unempfindlichkeit des Systems gegen Frequenzsprünge der Oszillatoren erhöht und andererseits die Verschlechterung des Systemverhaltens bezüglich Rauschstörern klein gehalten werden kann.

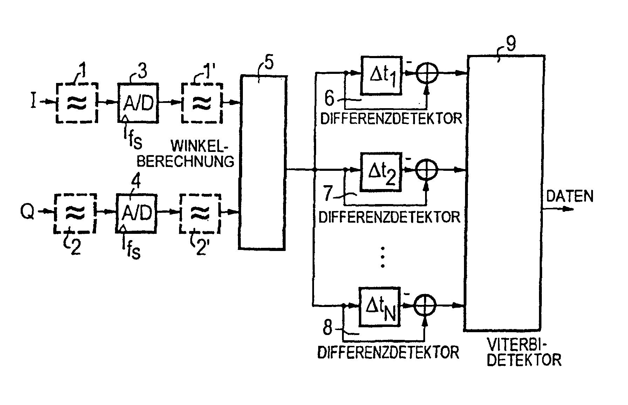

Nachstehend wird die Erfindung anhand eines in der Zeichnung dargestellten Ausführungsbeispiels näher erläutert.

Die Figur zeigt ein Blockschaltbild einer Detektionsanordnung. Die von einem Quadraturdemodulator (in der Figur nicht dargestellt) gelieferten Signale (Inphasesignal I und Quadratursignal Q) werden über jeweils ein Empfangsfilter 1, 2 an Analog/Digitalwandler 3, 4 geführt. Das Empfangsfilter kann aber auch nach erfolgter Analog/Digitalwandlung in Form eines digitalen Filters eingesetzt werden. Daher sind in der Zeichnung die Empfangsfilter 1, 2 strichliert gezeichnet und vor und nach den A/D-Wandlern 3, 4 angeordnet. Da beim Modulationsverfahren mit kontinuierlicher Phase die Information bei den Signalen der Phase aufmoduliert ist, wird im Empfänger nach erfolgter Quadraturdemodulation der Winkel, der sich aus den Abtastwertes des Inphase- und Quadratursignals ergibt, bestimmt. Dies kann beispielsweise über eine Tabelle, die den Arkustangens enthält, geschehen oder mit Hilfe eines geeigneten Algorithmus, z.B. dem CORDIC-Algorithmus. Dies erfolgt in der Einrichtung 5 zur Winkelberechnung, in der die von den A/D-Wandlern 3, 4 gelieferten quantisierten Abtastwerte paarweise, d.h. ein Abtastwert vom I-Kanal und ein gleichzeitig bestimmter Abtastwert vom Q-Kanal, in einen entsprechenden Phasenwinkel umgerechnet werden.

Um gegen Frequenzsprünge, verursacht durch die in den diversen Umsetzer-/Mischerstufen verwendeten Oszillatoren, unempfindlich zu sein, wird ein differentielles Detektionsverfahren verwendet, d.h. es werden Winkeldifferenzen zeitlich aufeinanderfolgender Winkelabtastwerte benutzt. Damit können sich langsam ändernde Phasenlagen eliminiert werden, also auch Frequenzsprünge, die klein im Vergleich zur betrachteten Abtastrate sind.

Die aus der Tabelle oder vom Algorithmus gelieferten Winkelabtastwerte werden parallel mehreren Differenzbildern 6, 7, 8 zugeführt, die zwei Abtastwerte, die eine Zeit Δtᵢ nacheinander abgetastet werden, voneinander subtrahieren. Die Ausgänge dieser Differenzbilder liefern je einen Schätzwert für die jeweilige Winkeldifferenz, der die übertragene Information enthält. Jeder dieser Schätzwerte enthält im Prinzip die übertragene Information, ist aber durch (teilweise) andere Rauschabtastwerte gestört. Diese Mehrfachschätzung erhöht prinzipiell die Zuverlässigkeit der erhaltenen Information, wodurch das Systemverhalten bezüglich Rauschstörungen verbessert wird. Die Differenzwinkelabtastwerte am Ausgang der Differenzbilder 6, 7, 8 werden dann einem Viterbidetektor 9 zugeführt, der mit geeigneten Metriken und einer entsprechenden Struktur (Anzahl der Zustände, Pfade, Pfadregisterlänge, ...) die gesendete Datenfolge schätzt.

Bei breitbandeffizienten Modulationsverfahren mit kontinuierlicher Phase ist jedem Symbol ein entsprechender Phasenübergang zugeordnet. Um eine hohe Bandbreiteneffizienz zu erreichen, werden Phasenübergänge verwendet, die sich über mehrere Symboldauern erstrecken. Dies führt zu Überlagerungen der informationsenthaltenden Phasenübergänge. Das Empfangssignal muß deswegen in der Regel sequentiell detektiert werden; es müssen dazu statt einzelner Abtastwerte ganze Sequenzen für die Detektion betrachtet werden. Ein geeignetes Detektionsverfahren dafür ist der Viterbialgorithmus.

Für eine Anwendung mit GTFM (Generalized Tamed Frequency Modulation) kann bereits mit zwei Differenzdetektoren, die als Laufzeit 2T und 3T verwenden, eine deutliche Verbesserung des Systemverhaltens bezüglich Rauschstörungen erreicht werden.

Das erfindungsgemäße Verfahren erlaubt es, neben einer guten Spektrumsnutzung (Bandbreiteneffizienz) und der Unempfindlichkeit gegen nichtlineare Verzerrungen auch relativ große Frequenzsprünge der verwendeten Mikrowellenoszillatoren ohne Bitfehler tolerieren zu können, ohne die Systemeigenschaften bezüglich Rauschstörungen, verglichen mit einem kohärenten Detektionsverfahren, deutlich zu verschlechtern.

## Patentansprüche

1. Verfahren zur Informationsübertragung, wobei die Information als Datenfolge, die aus Symbolen mit gegebener Symboldauer besteht, sendeseitig einem Signal in kontinuierlicher Phasenmodulation aufmoduliert wird und empfangsseitig durch eine Phasendetektion wiedergewonnen wird,
und wobei
bei der empfangsseitigen Detektion aufeinanderfolgende Abtastwerte der Phase des kontinuierlich phasenmodulierten gesendeten Signals genommen und mehreren parallelen Differenzberechnungen zugeführt werden, bei deren jeder die Differenz zwischen jedem Abtastwert und einem in zeitlichem Abstand davon erscheinenden Abtastwert ermittelt wird und die sich nur hinsichtlich der Größe dieses Abstandes unterscheiden,
und daß die ermittelten Differenzwerte einem Viterbi-Algorithmus unterworfen werden, der ausgelegt ist zur sequentiellen Schätzung der dem gesendeten Signal in kontinuierlicher Phasenmodulation aufmodulierten Datenfolge.

2. Verfahren nach Anspruch 1, **dadurch gekennzeichnet, daß** sich bei der Phasenmodulation jeder jeweils einem Symbol zugeordnete Phasenübergang über mehrere Symboldauern erstreckt.

3. Verfahren nach Anspruch 1 oder 2, **dadurch gekennzeichnet,**
**daß** das gesendete Signal empfangsseitig einer Quadraturdemodulation und einer nachfolgenden A/D-Umwandlung unterworfen wird, um quantisierte Abtastwertpaare entspechend der Inphase- und der Quadraturkomponente zu erhalten;
**daß** aus den Paaren der Inphase- und Quadratur-Abtastwerte die Abtastwerte der Phase des gesendeten Signal bestimmt werden.

4. Verfahren nach Anspruch 3, **dadurch gekennzeichnet, daß** die Bestimmung der Abtastwerte der Phase des gesendeten Signals aus den Paaren der Inphase- und Quadratur-Abtastwerte mittels einer Arcustangens-Tabelle oder mittels eines geeigneten Algorithmus erfolgt.

5. Verfahren nach Anspruch 3 oder 4, **dadurch gekennzeichnet, daß** empfangsseitig eine Empfangsfilterung vor oder nach der A/D-Umwandlung erfolgt.

6. Anordnung zur Detektion einer aus Symbolen gegebener Symboldauer bestehenden Datenfolge aus einem gesendeten Signal, dem die Datenfolge in einer Phasenmodulation aufmoduliert ist, mit folgenden Einrichtungen:
einem eingangsseitigen Quadraturdemodulator, der ein Inphase- und ein Quadratursignal liefert, und jeweils einem nachfolgenden A/D-Wandler (3, 4) für jedes dieser beiden Signale;
einer Einrichtung (5) zur Winkelberechnung, in der die Paare quantisierter Abtastwerte der Inphase- und Quadratursignale, wie sie von den A/D-Wandlern (3, 4) geliefert werden, jeweils in einen entsprechenden Phasenwinkelwert umgerechnet werden;
mehreren parallelen Differenzbildnern (6, 7, 8), welche die Phasenwinkelwerte empfangen und daraus Phasendifferenzwerte zwischen jedem Phasenwinkelwert und einem in zeitlichem Abstand davon erscheinenden Phasenwinkelwert berechnen und welche sich nur im zeitlichen Abstand der zu dieser Berechnung verwendeten Phasenwinkelwerte unterscheiden;
einem Viterbidetektor (9) zum Empfang der Phasendifferenzwerte und zum Schätzen der gesendeten Datenfolge aus diesen Differenzwerten,
**dadurch gekennzeichnet,**
**daß** der Viterbidetektor (9) so ausgelegt ist, daß er aus den Differenzwerten eine Datenfolge schätzen kann, die dem gesendeten Signal in einer kontinuierlichen Phasenmodulation aufmoduliert ist.

7. Anordnung nach Anspruch 6, **dadurch gekennzeichnet, daß** der Viterbidetektor (9) so ausgelegt ist, daß er aus den Differenzwerten eine Datenfolge schätzen kann, die dem gesendeten Signal in einer kontinuierlichen Phasenmodulation aufmoduliert ist, bei welcher sich jeder jeweils einem Symbol zugeordneter Phasenübergang über mehrere Symboldauern erstreckt.

8. Anordnung nach Anspruch 6 oder 7, **dadurch gekennzeichnet, daß** den A/D-Wandlern (3, 4) jeweils ein Empfangsfilter (1, 2; 1', 2') vor- oder nachgeschaltet ist.

## Claims

1. Method for information transmission, the information as a data sequence which comprises symbols with a given symbol duration being modulated on the transmitter side, in continual phase modulation into a signal and, on the receiver side, being reproduced by means of a phase detection and,
during the receiver side detection, sequential scanning values of the phase of the continually phase-modulated transmitted signal being taken and supplied to a plurality of parallel difference calculations, in each of which the difference between each scanning value and a scanning value which appears at a time interval therefrom is determined and which differ only with respect to the size of this interval,
and the determined difference values are subjected to a Viterbi algorithm which is designed for the sequential estimation of the data sequence which is modulated in continuous phase modulation into the transmitted signal.

2. Method according to claim 1, **characterised in that** each phase transition, which is assigned respectively to a symbol during the phase modulation, extends over a plurality of symbol durations.

3. Method according to claim 1 or 2, **characterised in that**
the transmitted signal is subjected on the receiver side to a quadrature demodulation and to a subsequent A/D conversion, in order to obtain quantised scanning value pairs corresponding to the in-phase and the quadrature component;
**in that** the scanning values of the phase of the transmitted signal are determined from the pairs of in-phase and quadrature scanning values.

4. Method according to claim 3, **characterised in that** the determination of the scanning values of the phase of the transmitted signal is effected from the pairs of in-phase and quadrature scanning values by means of an arc tangent table or by means of a suitable algorithm.

5. Method according to claim 3 or 4, **characterised in that** a receiver filtering is effected on the receiver side before or after the A/D conversion.

6. Arrangement for detection of a data sequence, which comprises symbols of a given symbol duration from a transmitted signal, into which the data sequence is modulated in a phase modulation, with the following devices:
an input side quadrature demodulator, which delivers an in-phase and a quadrature signal, and respectively a subsequent A/D converter (3, 4) for each of these two signals;
a device (5) for the angle calculation in which the pairs of quantised scanning values of the in-phase and quadrature signals, as they are delivered by the A/D converters (3, 4), are respectively converted into a corresponding phase angle value;
a plurality of parallel subtractors (6, 7, 8) which receive the phase angle values and calculate therefrom phase difference values between each phase angle value and a phase angle value which appears at a time interval therefrom, and which differ only in the time interval of the phase angle values used for this calculation;
a Viterbi detector (9) for receiving the phase difference values and for estimating the transmitted data sequence from these difference values,
**characterised in that**
the Viterbi detector (9) is designed such that, from the difference values, it can estimate a data sequence which is modulated into the transmitted signal in a continuous phase modulation.

7. Arrangement according to claim 6, **characterised in that** the Viterbi detector (9) is designed such that, from the difference values, it can estimate a data sequence which is modulated into the transmitted signal in a continuous phase modulation, in which each phase transition, which is assigned respectively to a symbol, extends over a plurality of symbol durations.

8. Arrangement according to claim 6 or 7, **characterised in that** a receiver filter (1, 2; 1', 2') is pre- or post-connected respectively to the A/D converters (3, 4).

## Revendications

1. Procédé de transmission d'informations, dans lequel l'information, qui est sous la forme d'une succession de données constituées de symboles ayant une durée de symbole donnée, est modulée sur un signal, en modulation de phase continue, côté émission, et est récupérée côté réception par une détection de phase, et dans lequel lors de la détection côté réception, des valeurs d'analyse successives de la phase du signal émis modulé en phase de façon continue sont saisies et plusieurs calculs différentiels parallèles sont conduits, pour chacun desquels est déterminée la différence entre chaque valeur d'analyse et une valeur d'analyse apparaissant à intervalle temporel de celle-ci et qui ne se différencient qu'en ce qui concerne la grandeur de cet intervalle, et les valeurs différentielles déterminées sont soumises à un algorithme de Viterbi qui est conçu pour l'estimation séquentielle de la succession de données modulées en modulation de phase continue sur le signal émis.

2. Procédé selon la revendication 1, **caractérisé en ce que** pour la modulation de phase chaque transition de phase associée à un symbole s'étend sur plusieurs durées de symbole.

3. Procédé selon la revendication 1 ou 2, **caractérisé en ce que** le signal émis est soumis côté réception à une démodulation de quadrature et à une conversion analogique/numérique suivante, pour obtenir des paires de valeurs d'analyse quantifiées correspondant à la composante en phase et à la composante en quadrature ; **en ce qu'**à partir des paires des valeurs d'analyse en phase et en quadrature, on détermine les valeurs d'analyse de la phase du signal émis.

4. Procédé selon la revendication 3, **caractérisé en ce que** la détermination des valeurs d'analyse de la phase du signal émis à partir des paires de valeurs d'analyse en phase et an quadrature s'effectue au moyen d'un tableau arc-tangente ou au moyen d'un algorithme approprié.

5. Procédé selon la revendication 3 ou 4, **caractérisé en ce que** côté réception, un filtrage de réception se produit avant ou après la conversion analogique/numérique.

6. Dispositif de détection d'une succession de données constituées de symboles de durée de symbole donnée à partir d'un signal émis sur lequel la succession de données est modulée dans une modulation de phase, comportant les dispositifs suivants :
un démodulateur de quadrature côté entrée, qui fournit un signal en phase et un signal en quadrature, et un convertisseur analogique / numérique (3,4) suivant pour chacun de ces deux signaux ;
un dispositif (5) pour le calcul d'angle dans lequel les paires de valeurs d'analyse quantifiées des signaux en phase et signaux en quadrature, tels qu'ils sont fournis par les convertisseurs analogiques/numériques (3, 4), sont converties chacune en une valeur d'angle de phase correspondante ;
plusieurs formateurs de différence (6, 7, 8) en parallèle qui reçoivent les valeurs d'angle de phase et calculent à partir de celles-ci des valeurs de différence de phase entre chaque valeur d'angle de phase et une valeur d'angle de phase apparaissant à intervalle de temps de celle-ci, et qui ne diffèrent que par l'intervalle de temps des valeurs d'angle de phase utilisées pour ce calcul ;
un détecteur de Viterbi (9) pour la réception des valeurs de différence de phase et pour estimer la succession de données émises à partir de ces valeurs différentielles,
**caractérisé en ce que** le détecteur de Viterbi (9) est conçu de manière à pouvoir estimer à partir des valeurs différentielles une succession de données qui est modulée en une modulation de phase continue sur le signal émis.

7. Dispositif selon la revendication 6, **caractérisé en ce que** le détecteur de Viterbi (9) est conçu de manière à pouvoir estimer à partir des valeurs différentielles une succession de données qui est modulée en une modulation de phase continue sur le signal émis, pour laquelle chaque transition de phase associée à un symbole s'étend sur plusieurs durées de symbole.

8. Dispositif selon la revendication 6 ou 7, **caractérisé en ce qu'**un filtre de réception (1, 2 ; 1', 2') respectif est monté en amont ou en aval des convertisseurs analogiques/numériques (3, 4).
